**Europäisches Patentamt**

**European Patent Office**

**Office européen des brevets**

(11) Veröffentlichungsnummer: **0 154 233**

A2

# EUROPÄISCHE PATENTANMELDUNG

(21) Anmeldenummer: 85101686.5

(22) Anmeldetag: 15.02.85

(51) Int. Cl.⁴: **B 23 Q 15/007**

(30) Priorität: 21.02.84 HU 68784

(43) Veröffentlichungstag der Anmeldung:
11.09.85 Patentblatt 85/37

(84) Benannte Vertragsstaaten:
AT BE CH DE FR GB IT LI LU NL SE

(71) Anmelder: PATRA Service GmbH
Nassauerring 8
D-4150 Krefeld(DE)

(72) Erfinder: **Pataky, Josef**
**Nördliche Lohstrasse 19**
**D-4150 Krefeld(DE)**

(72) Erfinder: **Farkas, József**
**Bihari ut 5/d**
**H-1107 Budapest(HU)**

(72) Erfinder: **Vékony, Sándor**
**Branyiszko ut 6/b**
**H-3519 Miskolc(HU)**

(72) Erfinder: **Csovák, Erno**
**Fo utca 11**
**H-1011 Budapest(HU)**

(74) Vertreter: **Dipl.-Ing. H. Hauck Dipl.-Phys. W. Schmitz**
**Dipl.-Ing. E. Graalfs Dipl.-Ing. W. Wehnert Dr.-Ing. W.**
**Döring**
**Kaiser-Wilhelm-Ring 41**
**D-4000 Düsseldorf 11(DE)**

(54) Verfahren und Einrichtung zur Feinfertigung von bestimmungsgemäss gleichmässigen Mantelflächen an Körpern.

(57) Es werden ein Verfahren und eine Einrichtung zur Feinfertigung von gleichmäßigen Mantelflächen an Körpern beschrieben. Die Mantelflächen werden mit Hilfe eines Werkzeuges bearbeitet, dessen Halterung an einem mit einem Antrieb gekoppelten Schlitten angeordnet ist. An der Halterung des Werkzeuges ist ein Meßgeber starr angeordnet, der mit einem längs der Verschiebungsbahn des Schlittens angeordneten Referenzgeber zusammenwirkt. Dadurch wird ein Istwertsignal erzeugt, das mit einem modifizierten Sollwertsignal verglichen wird, wobei mit dem resultierenden Ausgangssignal ein Servomechanismus gesteuert wird, der die relative Lage des Werkzeuges beeinflußt.

Figur 1

Verfahren und Einrichtung zur Feinfertigung von bestimmungsgemäß gleichmäßigen Mantelflächen an Körpern


Gegenstand der Erfindung ist ein Verfahren und eine Einrichtung, welche es ermöglichen, Mantelflächen an Körpern servogesteuert fertigzustellen, und zwar derart, daß dabei eine gemäß dem Stand der Technik üblicherweise noch unvermeidliche manuelle Endbearbeitung meist völlig entfallen bzw. in bedeutendem Maße beschränkt werden kann und - ggfls. in einem einzigen Arbeitsgang - dennoch eine ausreichende Bearbeitungsgenauigkeit gewährleistet wird, unter Anwendung von ausgesprochen einfachen und den lokalen Umständen optimal anpassbaren Mitteln.

Ein vorteilhaftes Anwendungsgebiet der Erfindung ist die Überholung von Bettführungen an Werkzeugmaschinen, die Bearbeitung von Kurbelwellen mittels Kurbelwellenschleifmaschinen etc. Aus der Beschreibung kann der Fachmann jedoch ersehen, daß die Erfindung immer dann angewendet werden kann, wenn Oberflächen, Mantelflächen von oft verhältnismäßig großen Körpern an deren Aufstellungsort bearbeitet werden müssen, z.B. zwecks Überholung von Gleitführungen, Abwicklungsflächen, Walzen etc.

So gibt es z.B. im Hüttenwesen und in Walzwerken Einrichtungen mit bestimmungsgemäß ebenen bzw. gleichmäßig bauchigen oder hohlgewölbten Flächen, welche gefräst, geschliffen etc. werden müssen, um die erwünschte Arbeitsfläche zu erzielen. Es müssen auch oft Stahlbodenplatten, ferner verschiedenartige Zylinder für diverse Anwendungen an der Einbaustelle nachträglich bearbeitet (überholt) werden, ohne daß diese deswegen abmontiert, geschweige denn abtransportiert werden müssen.

Bei der Feinbearbeitung von Gleitbahnen an Maschinenelementen und insbesondere der Oberfläche von Fahrbahnen, z.B. Schlitten-Bettführungen, ist es immer schwierig, einen optimalen Kompromiß zwischen Genauigkeit und Wirtschaftlichkeit der Bearbeitung zu erzielen. Üblicherweise erfordert die Feinbearbeitung solcher Oberflächen kostspieligen manuellen Arbeitsaufwand (das Schaben solcher Flächen wird von geschulten Facharbeitern mit langjähriger Übung versehen und dauert sehr lange), und es ist eine bevorzugte Zielsetzung der Entwicklungstätigkeit, solche aufwendige manuelle Operationen überflüssig zu machen oder zumindest auf ein Minimum zu beschränken.

Dieser Anforderung werden die zeitgemäßen Mittel für die maschinelle Bearbeitung und deren Feinsteuerung immer mehr gerecht, soweit es sich um den Herstellungsprozeß neuer Produkte handelt, insbesondere wenn eine höhere Serienzahl die einfache Wiederholung eines identischen technologischen Prozesses ermöglicht.

Wenn aber schon abgearbeitete, ungleiche Flächen überholt werden sollen, um eine der Bestimmung entsprechend gleichmäßige Fläche wiederherzustellen, sind die Umstände individuell sehr verschieden, und

der Bearbeitungsvorgang muß diesen Umständen immer individuell angepaßt werden; die zu überholende Ausgangsfläche ist vielfach und zufällig uneben und liefert für die Servosteuerung eine derart große heterogene Menge von Istwertsignalen, daß deren maschinelle Verfolgung den Fachmann mit meist nicht überbrückbaren Hindernissen konfrontiert. Darum beruhen die Überholungstechniken auch heutzutage vorwiegend auf manuellen Bearbeitungsvorgängen. Um solche manuellen Bearbeitungsvorgänge möglichst völlig auszuräumen oder zumindest auf die Nachbearbeitung annähernd schon auf Endmaß maschinell bearbeiteter Flächen einzuschränken, werden die Mittel zur maschinellen Bearbeitung über Servomechanismen gesteuert, und es wurde auch versucht, diese Feinsteuerung derart zu verbessern, daß die Bearbeitung ganz bis zur endgültigen Fertigstellung ausschließlich maschinell durchgeführt werden kann.

Es wurden viele Varianten entwickelt, bei denen die Steuerung des Servomechanismus auf grundsätzlich ähnlichen Erwägungen beruht. Diese gemeinsamen Erwägungen sind im sowjetischen Urheberschein Nr. 181476 beschrieben. Die Halterung des Bearbeitungsmittels (ggf. auch ein mehrköpfiger Werkzeughalter) ist bei dieser Lösung auf einem Schlitten angeordnet, und dieser Schlitten wird auf die zu überholende Arbeitsfläche aufgesetzt und auf der selben während des Arbeitsganges stetig verschoben. Währenddessen bearbeitet das Werkzeug die gleichzeitig als Verschiebungsbahn dienende Arbeitsfläche. Am Werkzeughalter wird starr ein Meßgeber befestigt, welcher mit einem Referenzgeber (Meisterstück, Schablone) zusammenwirkt; der Referenzgeber ist längs der Verschiebungsbahn des Schlittens und unmittelbar neben dieser angeordnet (bei der zitierten Lösung ist er als Kopierlineal ausgebildet). Das Istwertsignal ist der relativen Lage des am Werkzeughalter starr befestigten Meßgebers zum Referenzgeber proportional. Vom Istwertsignal wird in einem Regelkreis ein Stellsignal abgeleitet, und dieses steuert den Servomechanismus, welcher die relative Lage des Bearbeitungsmittels zur Arbeitsfläche beeinflußt.

Es folgt aus den o.a. Merkmalen der bekannten Lösung, daß das Istwertsignal die dem Stellbefehl eigentlich zugrundezulegende Größe nicht unmittelbar repräsentiert, da sie ja nicht der gegenwärtigen relativen Lage des Bearbeitungsmittels zur Arbeitsfläche, sondern der relativen Lage des Bearbeitungsmittels zum Referenzgeber proportional ist: Das Stellsignal wird also von einem Istwertsignal abgeleitet, welches die maßgebende Größe nur mittelbar erfaßt. Darum müssen bei der bekannten Lösung allen Elementen des den Stellbefehl gebenden Regelkreises gegenüber sehr hohe Anforderungen gestellt werden: Das als Referenzgeber dienende Kopierlineal muß die diskreten Sollpositionen mit einer höheren Genauigkeit repräsentieren als die erforderliche Genauigkeit der fertiggestellten Arbeitsfläche. Der Meßgeber kann zwar die relative Lage des Bearbeitungsmittels zum Referenzgeber erfassen, ist aber den Unebenheiten der Arbeitsfläche gegenüber, welche die jeweilige relative Lage verursachen, unmittelbar nicht sensitiv. Es entsteht ein Folgeprozeß, der weder ausreichend schnell wirkend, noch ausreichend elastisch ist, um plötzliche sprunghafte Veränderungen der Schnittiefe auszuschließen, die eine Beschädigung bzw. evtl. eine Zerstörung des Bearbeitungsmittels oder eines Teils der Arbeitsfläche verursachen können.

Zugleich erfordert ein solcher Steuermechanismus die Anwendung eines Referenzgebers, welcher dem Profil der zu erstellenden jeweiligen Arbeitsfläche getreu entspricht, der also jeweils nur für ein bestimmtes Profil anwendbar ist. Dies würde in der Überholungstechnik und bei der Neuerstellung jeweils verschieden gestalteter Einzelprodukte die Anwendung einer Vielzahl individueller Referenzgeber verschiedener Gestalt erfordern.

Die Erfinder haben untersucht, wie die grundlegenden Eigenschaften der bekannten Lösung beibehalten werden können und dennoch diese Lösung so verbessert werden kann, daß dem Referenzgeber gegenüber keine kritischen Genauigkeitsanforderungen gestellt werden müssen und die Folgegenauigkeit dennoch ausreichend bleibt, ferner ein Mindestmaß an Apparaturen, die elastische Anpassung an völlig verschiedene lokale Bedingungen gewährleistet und dabei eine beliebige Gestalt der Arbeitsfläche so erzielt werden kann, daß dazu kein Satz individuell gestalteter Referenzgeber erforderlich ist.

Die Erfindung beruht auf der Erkenntnis, daß diese Anforderungen restlos erfüllt werden können, wenn man das Istwertsignal zwar in der bekannten Weise erstellt, dieses also die relative Lage zwischen Referenzgeber und Bearbeitungsmittel repräsentiert, das Istwertsignal aber mit einem Sollwertsignal verglichen
wird, welches als Funktion der momentanen Lage des
Schlittens (der Stelle x) die Differenz $y_K - y_A$ repräsentiert, wobei $y_K$ die relative Höhe des Referenzgebers an der Stelle x und $y_A$ die nominelle relative
Höhe ist, in welcher sich der Meßgeber an der Stelle
x befinden muß, wenn sich das Bearbeitungsmittel
in der für den Arbeitsvorgang vorgeschriebenen Höhe
befindet.

In dieser Beschreibung wird die Lage von Punkten im
Raum als Lage in einem zweidimensionalen orthogonalen
Koordinatennetz bestimmt, dessen Abszisse in der
Ebene der Arbeitsfläche und zur Vorschubrichtung des
Schlittens parallel liegt, während die Ordinate
orthogonal zu sowohl der Arbeitsfläche als auch
der Vorschubrichtung liegt. Die relative "Höhe"
bezieht sich auf den lotrechten Abstand von der
Arbeitsfläche. Liegt die Arbeitsfläche waagerecht,
ist sie tatsächlich ein Höhenmaß (senkrechter Abstand), liegt die Arbeitsfläche jedoch senkrecht,
ist die relative "Höhe" ein waagerecht gemessener
Abstand. Diese Interpretation kann auch auf schiefe
Lagen ausgedehnt werden.

Erfindungsgemäß kann somit die Folgesteuerung auch
unabhängig von der tatsächlichen Geometrie des am
Arbeitsplatz befestigten Referenzgebers an die erwünschte Gestalt (Geometrie) der fertiggestellten Arbeitsfläche angepaßt werden, und es können auch Abweichungen des Referenzgebers von einer idealen Geraden kompensiert werden, und zwar mittels einer ausgesprochen einfachen Apparatur. Es ist eine Vielzahl von mannigfaltig ausgebildeten Signalumsetzgeräten vorhanden. Es gibt z.B. einer beliebigen Funktion entsprechend steuerbare Signalgeneratoren (Funktionsgeneratoren), Signalumformer, Abwicklungsmechanismen etc. Diese ermöglichen die Erstellung modifizierter Steuersignale, und jegliches Anpaßbedürfnis kann unter Beibehaltung des allgemeinen Aufbaues und der Hauptbauteile lediglich durch diese Signalumsetzer befriedigt werden.

Wenn man ein Folgesignal der jeweiligen Stelle x erstellt und dieses in einem Signalumsetzer (in Abhängigkeit von der erwünschten Geometrie bzw. den Abweichungen des Referenzgebers vom idealen Profil) so modifiziert, daß es der jeweilig erwünschten nominalen Höhe des Werkzeuges an der jeweiligen Stelle x proportional ist, dann muß der Referenzgeber nicht den jeweilig verschiedenen individuellen Anforderungen angepaßt werden. Die Anpassung erfolgt, indem der relative Abstand zwischen Referenzgeber und Meßgeber - als Istwertsignal - mit diesem modifizierten Steuersignal (Sollwertsignal) verglichen wird, also die jeweilige Umsetzung des Folgesignals die erwünschte Anpassung besorgt. Die mechanische Gestaltung der Bauelemente des Regelkreises kann unverändert bleiben, ein einfacher Aufbau wird ermöglicht, die grundsätzliche Stabilität der Istwerterfassung ist auf einfache und zuverlässige Weise gewährleistet. Die vom konstruktiven Aufbau ganz unabhängig, beliebig vornehmbare Gestaltung des modifizierten Sollwertsignales kann den Regelmechanismus an beliebige Umstände und Anforderungen anpassen, d.h. es können sogar während des Arbeitsganges unerwartet auftretende Abweichungen kompensiert bzw. nachträglich bestimmte abweichende oder zusätzliche Anforderungen in Betracht gezogen werden.

Die vorstehend genannte Aufgabe wird erfindungsgemäß gelöst, indem

als Referenzgeber ein starrer oder quasi-starrer Körper in einer zur Arbeitsstelle parallel (darüber, daneben) liegenden Ebene zwischen zwei die Länge der zu bearbeitenden Oberfläche umfassenden Stellen in einer auf die jeweilige Stelle x der Verschiebungsbahn bezogenen Höhe ausgespannt wird (z.B. ein an diesen Stellen in der nominalen relativen Höhe abgestütztes, mittels Gewicht gespannt gehaltenes Metallband oder Drahtseil);

als mit dem Referenzgeber zusammenwirkender Meßgeber ein zweckmäßig induktiver oder kapazitiver Abstandsgeber eingesetzt wird, der in an sich bekannter Weise den jeweiligen Abstand zwischen Meßgeber und Referenzgeber repräsentierende erste elektrische Signale liefert, und dieser Abstandgeber wird starr an der Halterung des Bearbeitungsmittels befestigt, und zwar derart, daß dessen Sensor an beliebiger Stelle der Verschiebungsbahn dem Referenzgeber innerhalb des Sensibilitätsbereiches des Meßgebers gegenüberliegt;

in einer Signalumsetzeinheit in Abhängigkeit von einem die jeweilige Stelle x der Verschiebungsbahn repräsen-

- 9 -  0154233

tierenden Eingangssignal ein modifiziertes Sollwertsignal erzeugt wird, welches der Funktion

$$y_K - y_A = f(x)$$

entspricht, wobei $x_K$ die relative Höhe des Referenzgebers an der jeweiligen Stelle x und $y_A$ die in der
technischen Vorschrift angegebene nominale relative
Höhe, in welcher sich der Meßgeber befinden muß, wenn
das Bearbeitungsmittel gerade in der für die jeweilige
Stelle x der Verschiebungsbahn vorausgesehenen Höhe
liegt, bedeuten;

der Verschiebung des Schlittens stetig oder quasi-
stetig (mittels Abtasten) folgend ein zweites
elektrisches Signal erzeugt wird, welches den momentanen Wert der Stelle x der Verschiebungsbahn verkörpert, wobei dieses Signal an den Eingang der Signalumsetzeinheit geschaltet wird; und

das modifizierte Sollwertsignal an den Sollwerteingang eines Differenzgebers geschaltet wird, an dessen
Istwerteingang das erste elektrische Signal (Ausgangssignal des Meßgebers) geschaltet wird, wobei der
Servomechanismus vom Ausgangssignal des Differenzgebers (oder davon abgeleiteten Signalen) gesteuert
wird.

Als Signalumsetzeinheit kann ein der Funktion $f(x)$
entsprechend programmierter Signalgenerator verwendet
werden, oder ein elektronischer Datenspeicher (vorteilhafterweise ein PROM), in welchem alle in der
technischen Vorschrift vorkommende nominelle Größen
$y_K - y_A$ in Form binärer Daten so eingespeichert werden, daß sie mit den jeweiligen Wert der Stelle x verkörpernden Adreßsignalen ausgelesen werden können, und dieser Datenspeicher wird mit Signalen adressiert, die vom zweiten elektrischen Signal abgeleitet werden. Die so ausgelesenen Signale werden an den Sollwerteingang des Differenzgebers geschaltet.

Eine weitere vorteilhafte Variante ermöglicht, das Folgesignal der Stelle x mechanisch umzusetzen, wenn am Standort der Arbeitsfläche die Betriebsumstände die Wirkungsweise bzw. die Genauigkeit der elektronischen Signalumsetzer beeinträchtigen können. Es kann z.B. für die Signalumsetzung eine Programmscheibe angewendet werden, deren Umfangsfläche als Abbildung der Funktion f (x) gestaltet ist, und mit dieser Umfangsfläche wird ein Abtastmittel, z.B. ein Meßumsetzer mit elektrischem Ausgang, gekoppelt, und die Abtastsignale werden mit einem in an sich bekannter Weise erstellten, der momentanen Geschwindigkeit des Schlittens proportionalen dritten elektrischen Signal verglichen. Es wird ein das Resultat des Vergleichs repräsentierendes Signal erstellt, und dieses wird an den Sollwerteingang des Differenzgebers geschaltet.

Eine weitere vorteilhafte Variante des erfindungsgemäßen Verfahrens vermindert die Möglichkeit der Anhäufung von Ungenauigkeiten im Regelmechanismus. Die Länge L der Arbeitsfläche wird in eine Anzahl N (N ist eine beliebige ganze Zahl) äquidistanter oder voneinander verschieden langer Abschnitte $\Delta x_i$ aufgeteilt, und vor Beginn des Arbeitsganges (bei mehreren Arbeitsgängen vor Beginn des ersten Arbeitsganges) wird in den Grenzpunkten zwischen den jeweils benachbarten Abschnitten $\Delta x_i$ bzw. $\Delta x_i + 1$ ($1 \leq i \leq N-1$) die Funktion $f(x)$ durch Messen genau bestimmt, und die Folgeregelung wird abschnittsweise, immer der jeweiligen Teilfunktion $f(x)_i$ entsprechend vorgenommen. In den Grenzstellen verkörpert also das unmittelbar meßtechnisch erstellte Sollwertsignal den genauen Nennwert, und nur für die inneren Stellen x im jeweiligen Abschnitt $\Delta x_i$ werden die der Teilfunktion $f(x)_i$ entsprechenden modifizierten Sollwertsignale über Signalumsetzmittel erstellt. Der Verlauf der Kennlinie für verschiedene Abschnitte $\Delta x_i$ bzw. $\Delta x`_i$ kann voneinander abweichen, eventuell nur in den Randwerten, aber auch die Funktion $f(x)_i$ kann von der Funktion $f(x)`_i$ abweichen (auch im letzteren Fall weichen die Kurven vorteilhaft nur in Transformationskonstanten voneinander ab).

Um die Bearbeitung der Arbeitsfläche durchweg stetig fortsetzen zu können, stellt man zweckmäßigerweise neben die Anfangsstelle der Arbeitsfläche einen Ständer, der als Verlängerung der jeweiligen Arbeitsfläche dient, also mit entsprechendem Oberflächenprofil ausgeführt ist und zweckmäßig auch den Antrieb für den Schlitten beherbergt. Dann kann der Schlitten vor Beginn des Arbeitsganges am Ständer angebracht und von dort fortlaufend gegen die Stelle $x_L$ verschoben werden, so daß somit die Stelle $x_0$ auch schon bearbeitet werden kann.

Die Erfindung wird nunmehr eingehend anhand von Ausführungsbeispielen in Verbindung mit der Zeichnung
im einzelnen erläutert. Es zeigen:

Figur 1    eine beispielhafte Anordnung mit einem
die Verschiebungsbahn verlängernden
Ständer, von welchem ausgehend der
Schlitten verschoben wird;

Figur 2    das Blockdiagramm einer Ausführungsform eines Regelkreises;

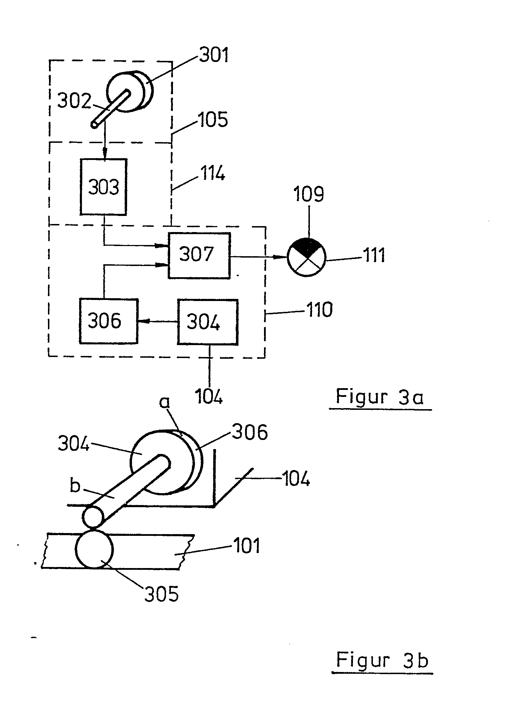

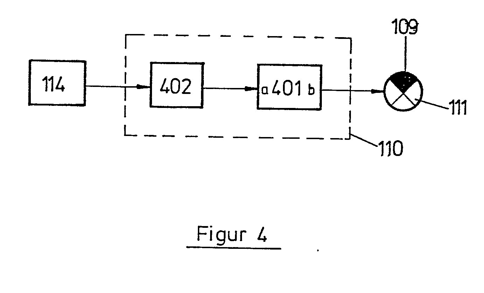

die Figuren
3 und 4    die Erstellung des modifizierten Sollwertsignales, wobei Figur 3 die Anwendung einer Programmscheibe zur
mechanischen Umsetzung und Figur 4
die Anwendung eines digitalen Datenspeichers, in welchem die möglichen
Werte der Funktion f (x), den Stellen
x gemäß adressiert, gespeichert
wurden, zeigt; und

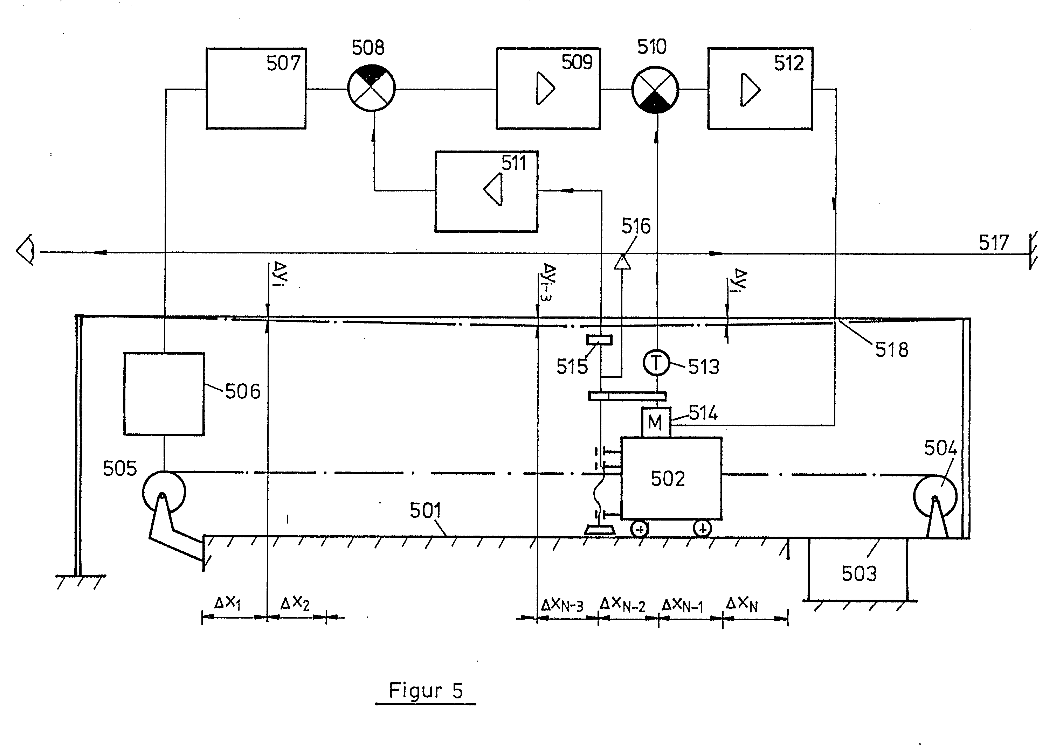

Figur 5    eine weitere Ausführungsform, die die
o.a. abschnittsweise Iteration des
idealen Funktionsverlaufs ermöglicht.

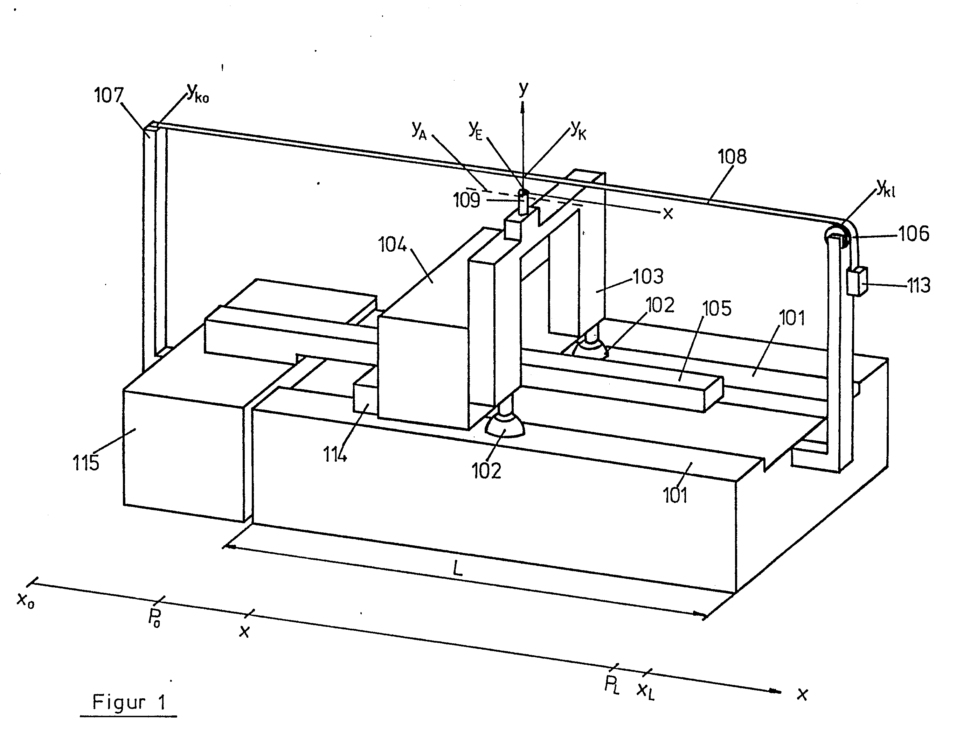

Die beiden Arbeitsflächen 101 am Maschinenkörper nach
Abbildung 1 waren ursprünglich - und bestimmungsgemäß - gleichmäßige und in gleicher Ebene liegende
Flächen. Vor der Überholung sind die beiden abgenutzten Flächen selbstverständlich ungleichmäßig
und liegen auch nicht eindeutig in gleicher Ebene;
annähernd können sie aber immer noch als plangerecht (in gleicher Ebene liegend) betrachtet werden. Darum können für die Bearbeitung der beiden Arbeitsflächen 101 zwei Bearbeitungsmittel 102 angewendet werden, welche an einer gemeinsamen Halterung 103 angebracht und mit einem servogesteuerten gemeinsamen Stellglied verbunden sind. Die Halterung 103 ist auf dem Schlitten 104 angeordnet, welcher vom Antrieb 105 längs der Bettführung verschoben wird. In diesem Fall ist diese Bettführung die zu bearbeitende Arbeitsfläche 101. Neben deren einem Ende (der Anfangsstelle $x_0$) ist der Ständer 115 angeordnet; der Schlitten 104 kann vor Beginn des Arbeitsgangs auf den Ständer 115 aufgesetzt und von dort gegen die Stelle $x_L$ verschoben werden; die gesamte Arbeitsfläche 101 kann fortlaufend bearbeitet werden.

In Figur 1 ist unter der Anordnung eine Wegachse eingezeichnet; die Länge L der Arbeitsfläche 101 liegt zwischen den Schnittpunkten $P_0$ und $P_L$. Über der Arbeitsfläche 101 ist an den Stellen $x_0$ und $x_L$ ($x_0 < P_0$ und $x_L > P_L$) je eine Trommel 106, 107 befestigt, und über diese Trommeln 106, 107 ist als Referenzgeber 108 ein Stahlband ausgespannt, welches durch ein Gewicht 113 straff gehalten wird. Der Referenzgeber 108 liegt an den Stützpunkten, also an Stelle $x_0$, bzw. $x_L$ in der relativen Höhe $y_{KO}=y_{KL}$; zwischen den beiden Stützpunkten ist die relative Höhe verschieden: sie ist jeweils um so viel kleiner als $y_{KO}$, wieviel an der jeweiligen Stelle x der Durchhang des Stahlbands beträgt. Der starr (oder über lösbare Bindemittel) an der Halterung 103 befestigte Messgeber 109 ragt mit seinem Sensor so nahe in die Umgebung des Referenzgebers 108 hinauf, daß die ausreichende Sensibilität des Meßgebers 109 gewährleistet ist.

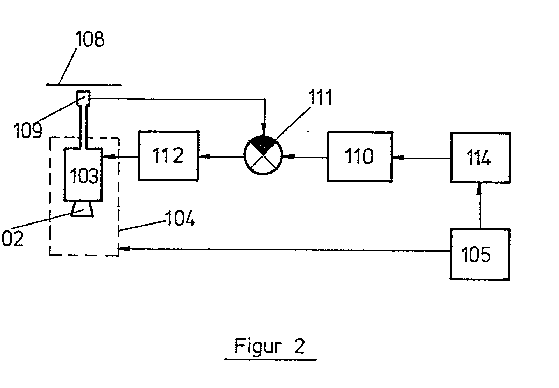

Wäre das Bearbeitungsmittel 102 eben in der - der technischen Vorschrift entsprechenden - richtigen relativen Höhe, dann wäre auch die momentane relative Höhe $y_E$ des Sensors des Meßgebers 109 der nominalen Höhe $y_A$ gleich. In Figur 1 ist eine demgegenüber höhere momentane Lage gezeigt, das Bearbeitungsmittel 102 liegt eben über der vorgeschriebenen Höhe (das Werkzeug steht über der Arbeitsfläche 101 in der Luft), und dementsprechend befindet sich auch der Sensor höher als vorgeschrieben, $y_E > y_A$. So gelangt vom Meßgeber 109 (s. auch Figur 2) ein Istwertsignal zum Differenzgeber 111, welches ein Senken des Bearbeitungsmittels 102 anregt ( $|y_E - y_K| < |y_K - y_A|$, das Istwertsignal erstrebt die Erhöhung des Abstands). Der Servomechanismus 112 erhält über den Differenzgeber 111 einen Stellbefehl zum Senken; wenn die Halterung 103 des Bearbeitungsmittels 102 sinkt, nimmt der Wert $|y_E - y_K|$ entsprechend zu.

Das Istwertsignal wird in diesem Regelprozess - im Differenzgeber 111 - nicht mit einem der nominellen relativen Höhe $y_A$ unmittelbar zugeordneten Sollwertsignal verglichen, sondern mit einem modifizierten Sollwertsignal, welches den jeweils x-abhängigen, veränderlichen Wert der Größe $y_K - y_A$ verkörpert. Die der jeweiligen Stelle x entsprechende Modifizierung ist geeignet, einerseits die Abweichungen infolge Durchhangs beim Stahlband zu kompensieren (also die an der jeweiligen Stelle x bestehende Differenz $y_A - y_{AO}$ in Betracht zu ziehen), andererseits den Sollwert einer eventuell erwünschten Bauchigkeit oder Hohlgewölbtheit der endgültigen Arbeitsfläche 101 anzupassen, ferner beliebige weitere Abweichungen zu kompensieren, die durch Störwirkungen verursacht wurden. Alle Korrekturen sind auf die jeweilige Stelle x bezogen; unabhängig vom konkreten Aufbau und der konkreten Wirkungsweise entspricht also die Signalumsetzeinheit 110 in ihrer Funktion einer Signalquelle, die - vom eine gewisse Stelle x repräsentierenden Eingangssignal gesteuert - ein Ausgangssignal liefert, welches die Funktion f (x) verkörpert.

Figur 2 zeigt eine beispielhafte Ausführungsform des Regelkreises, der den Servomechanismus 112 steuert, und zwar in Abhängigkeit von der jeweiligen Differenz zwischen dem vom Meßgeber 109 erstellten Istwertsignal und dem modifizierten Sollwertsignal. An den Steuereingang der Signalumsetzeinheit 110 ist der Ausgang eines Positionsgebers 114 angeschlossen; dessen elektrisches Ausgangssignal ist der jeweiligen Position des Schlittens 104 (Stelle x) proportional. Zu diesem Zweck kann ja die Stelle x auch von einem Meßgeber erfaßt werden, welcher gegenüber der Gegenwart des Schlittens 104 unmittelbar sensibel ist; zweckmäßig nutzt man aber die Tatsache aus, daß bei unveränderten Bahn-Kenndaten ein eindeutiger Zusammenhang zwischen dem Zeitintegral der Winkelgeschwindigkeit des Antriebs 105 und dem Gesamtweg des Schlittens 104 während der gleichen Zeitspanne besteht. Der Positionsgeber 114 ist vorteilhaft ein mit dem Antrieb 105 gekoppelter Meßgeber, z.B. ein mit der Achse des Antriebs 105 gekoppelter Winkelgeschwindigkeits-Geber.

Bei der Ausführungsform nach Figur 3 a ist ein Winkelgeschwindigkeits-Geber 303 mit der Achse 302 des als Antrieb 105 angewandten Motors 301 gekoppelt, und dessen Ausgang (Ausgang des Positionsgebers 114) ist an einen Eingang einer Vergleicherschaltung 307 angeschlossen, welche einen Teil der Signalumsetzeinheit 110 bildet. An den anderen Eingang der Vergleicherschaltung 307 ist der Ausgang eines Meßumsetzers 306 angeschlossen, welcher mit einer Programmscheibe 304 gekoppelt ist. Die Mantelfläche 304a der Programmscheibe 304 ist als Abbildung der Funktion f (x) geformt; die Umfangsgeschwindigkeit der Programmscheibe 304 muß der Bahngeschwindigkeit des Schlittens 104 entsprechen. Der Ausgang der Vergleicherschaltung 307 bildet den Ausgang der Signalumsetzeinheit 110 und ist an den Sollwerteingang des Differenzgebers 111 angeschlossen.

Die Identität von Umfangsgeschwindigkeit der Programmscheibe 304 und Bahngeschwindigkeit des Schlittens 104 kann z.B. in der in Figur 3 b veranschaulichten Weise gewährleistet werden. Der Meßumsetzer 306 ist mit der Mantelfläche 304a der Programmscheibe 304 gekoppelt. Die Achse 304b der Programmscheibe 304 ist mit einem Getriebeorgan 305 gekoppelt, welches die Verschiebung des Schlittens verfolgt; bei der Ausführung nach Figur 3 b ist das Getriebeorgan 305 eine Gummiwalze, welche am Schlitten 104 angeordnet ist und während der Verschiebung des Schlittens 104 längs der Arbeitsfläche 101 eine Rollbewegung vollführend, eine - den Schlittenvorschug abbildende - Umfangsgeschwindigkeit mittels elastischem Druck auf die Achse 304b der Programmscheibe 304 überträgt; die Umfangsgeschwindigkeit der Programmscheibe 304 bleibt mit der Verschiebungsgeschwindigkeit des Schlittens 104 folgegerecht identisch.

Figur 4 zeigt einen umprogrammierbaren elektronischen Datenspeicher 401. Wenn die Einrichtung in einem Gebiet angewendet wird, wo die Funktion f (x) dauernd den gleichen Verlauf hat, kann ein ROM mit fest gespeichertem Inhalt angewendet werden; aus den Bedingungen im Hauptanwendungsgebiet der Erfindung (Überholung abgenutzter Flächen) folgt, daß üblicherweise der Verlauf der Funktion f (x) bzw. deren RAndwerte veränderlich sein müssen; dann wird vorteilhaft ein PROM eingesetzt. Als Adressengeber 402 dient ein Signalumformer, der die Positionssignale für die Stellen x in Adressensignale umsetzt und der Organisation des Datenspeichers 401 anpaßt. Der Adressengeber 402 ist über seinen Steuereingang mit dem Ausgang des Positionsgebers 114 und über seinen Ausgang mit den Adresseneingängen 401a des Datenspeichers 401 gekoppelt. Die Leseausgänge 401b des Datenspeichers 401 sind unmittelbar oder mittelbar an den Sollwerteingang des Differenzgebers 111 angeschlossen. Erscheint ein Adressensignal am Adresseneingang 401a, wird das der jeweiligen Stelle x zugeordnete Sollwertsignal an den Differenzgeber 111 angeschaltet.

Bei der Ausführung nach Figur 5 ist die Verschiebungsbahn ebenfalls durch einen Ständer 503 verlängert. Der Schlitten 502 wird bei Beginn des Arbeitsganges am Ständer 503 aufgesetzt, an dem Ende des Abschnitts $\Delta x_N$, welcher am Ständer 503 anliegt. Die Arbeitsfläche 501 wurde in N Abschnitte $\Delta x_i$ ( $1 \leq i \leq N$ ) aufgeteilt. Auch bei dieser Ausführungsform wird als Referenzgeber 518 ein Stahlband mit kleinem Durchhang parallel zur Verschiebungsbahn ausgespannt, und die momentane relative Höhe $y_E$ des Meßgebers 515 wird ebenfalls als Abstand ($y_K - y_E$) des am Werkzeughalter starr befestigten Sensors vom Referenzgeber 518 erfaßt. Bei dieser Ausführungsform wird aber auch ein optisches Kontrollsystem 517 angewendet, dessen optischer Höhengeber 506 ein Signal liefert, welches der jeweiligen Abweichung der Referenzhöhe $y_A$ (x) von der Spannhöhe $y_{KO} = y_{KL}$, also der Differenz $y_A - y_{AO}$, entspricht. Der Schlitten 502 wird längs der Arbeitsfläche 501 über ein Seilgetriebe 504 verschoben, dessen - die Drehbewegung übersetzendes - mechanisches Element 505 dieselbe Funktion versieht, wie die Gummiwalze nach Figur 3 b. Mit dem Element 505 ist ein Weggeber 506 gekoppelt, dessen Ausgangssignal der jeweiligen Stelle x der momentanen Lage des Schlittens 502 proportional ist und an den Steuereingang der Signalumsetzeinheit 507 angekoppelt wird: der Weggeber 506 versieht also die Funktion des Positionsgebers 114 (Figur 2). An die entsprechenden Eingänge des Differenzgebers 508 sind einerseits der Ausgang der Signalumsetzeinheit 507, andererseits - unmittelbar oder mittelbar, z.B. über einen Verstärker 511 - der Ausgang des Meßgebers 515 angeschlossen, welch letzterer das der Differenz $y_K - y_E$ proportionale Istwertsignal erstellt. Der Ausgang des Differenzgebers 508 ist - bei dieser Ausführungsform über einen Regelverstärker 509 - an den entsprechenden Eingang eines weiteren Differenzgebers 510 angeschlossen, an dessen anderen Eingang der Ausgang eines Tachogenerators 513 angeschlossen ist; letzterer ist mit dem Motor 514 des Antriebs für den Schlitten 502 gekoppelt. Der Ausgang des zweiten Differenzgebers 510 liefert das Stellsignal und ist an den Servoverstärker 512 angeschlossen.

Auf Grund des bisherigen kann ein Fachmann auch die Wirkungsweise der Ausführungsform nach Figur 5 verfolgen, darum soll diese nur kurz skizziert werden.

Die Aufgabe des Schlittens 502 besteht darin, das Bearbeitungsmittel längs der zu bearbeitenden Fläche zu verschieben. Aufgabe der Erfindung ist es, im Laufe der Verschiebung zu gewährleisten, daß das Werkzeug immer genau in der Höhe steht, die im Bearbeitungsplan (technische Vorschrift) durch die Funktion f (x) für jede Stelle x bestimmt ist und demzufolge die Schnittiefe entsprechend eingestellt und die endgültige Gestalt der Arbeitsfläche fehlerfrei die erwünschte ist. Dazu müssen folgende Kenndaten erfaßt werden: die jeweilige Lage des Schlittens 502, die jeweilige tatsächliche und die - der Bearbeitungsvorschrift gemäß jeweilig erwünschte - nominelle Höhe des Bearbeitungsmittels. Die Stelle x kann auf beliebige bekannte Weise erfaßt werden, zweckmäßig mittelbar als ein die Weglänge repräsentierendes Zeitintegral der Verschiebungsgeschwindigkeit. Der Weggeber 500 kann ein Weginkremente liefernder Impulsgeber sein oder ein Kodiergerät mit je einer Kodescheibe pro Bit, ferner ein mehrgeschwindiges Potentiometer, ein Resolver, usw. Jedes dieser Mittel erstellt Signale, welche - in entweder unmittelbar verwendbarer oder noch aufzuarbeitender Form - die jeweilige Stelle x (die momentane Lage des Schlittens 502) verkörpern; es kann ein stetiges Signal sein aber auch eine Abtastsignalfolge. Bei inkrementeller Erfassung - eventuell auch bei Erstellung des Zeitintegrals - werden diskrete Systemfehler der Wegmessung addiert, aber den resultierenden Fehlwert kann man beschränken, indem man die Folgeerfassung in jedem Abschnitt $\Delta x_i$ von einem genauen Randwert startet, der in den Abschnittsgrenzen vorangehend meßtechnisch bestimmt wurde. Wird z.B. ein Kodiergerät mit fünf Elementarscheiben (5 Bit) eingesetzt, dann werden bei einer Umdrehung der Bogenlänge des Umfangs entsprechend 32 Inkremente des Abschnitts erstellt. Mittels geeigneter Wahl der Umsetzung im Getriebe kann der Gerätesatz für verschiedene Abschnittslängen gleichzeitig eingesetzt werden ohne Notwendigkeit konstruktiver Eingriffe. Das Auflösevermögen des Systems kann der Fachmann in Abhängigkeit von lokalen Gegebenheiten und Anforderungen individuell wählen. Die Begrenzung der Anhäufung von Systemfehlern mittels abschnittsweiser Folgeregelung ermöglicht,daß das Profil der Arbeitsfläche mit einer innerhalb des zugelassenen Toleranzfeldes bleibenden Genauigkeit fertiggestellt wurde.

Zunächst wird die Apparatur der Figur 5 gemäß angeordnet und auch das optische Kontrollsystem 517 montiert. Dann wird der Schlitten 502 in den mittleren Teil der Verschiebungsbahn gestellt, der Regelkreis angeschaltet und das Meßsystem kalibriert, wobei der Abstand $y_E$-$y_K$ zwischen Sensor und Referenzgeber sukzessiv verändert wird. Dann bringt man den Schlitten 502 in eine Endstellung und nacheinander an alle Abschnittsgrenzen. An jeder Grenzstelle wird die Abweichung der Höhe $y_K$ des Referenzgebers 518 vom Wert $y_{KO}$ als Veränderung des Abstands von der Höhe des ideal geraden Lichtzeigers im Kontrollsystem 517 bestimmt. Die Systemfehlern, z.B. durch Seildurchhang, zufolge auftretenden Abweichungen werden so erfaßt und eliminiert. Die Meßwerte können in einer Tabelle zusammengefaßt werden als Schnittpunkte der Kennlinie f (x) an diskreten Stellen x. Soll die Arbeitsfläche 501 vom Profil einer ideal geraden Fläche abweichend geformt werden, müssen in der Tabelle außer den Systemfehlern auch die dem erwünschten Profil zufolge notwendigen Korrekturen in Betracht gezogen werden. Die Verstellung des Werkzeugs wird dann gemäß einer Funktion f (x) gesteuert, in welcher mehrere Veränderliche zur Geltung kommen. Da bei der abschnittsweisen Folgeregelung der resultierende Regelfehler sehr gering gehalten wird, kann die Schnittiefe innerhalb einer außerordentlich engen betriebssicheren Toleranzgrenze reguliert werden.

Unabhängig davon, welche konkrete Mittel zur Datenerfassung und Erstellung der Regelsignale angewendet werden (Programmscheibe, Signalgenerator, PROM, usw.) kann somit bei der Ausführung gemäß Figur 5 gewährleistet werden, daß die inkrementale Steuerung nur abschnittsweise freilaufend wirkt; die Addition von Inkrementen ist beschränkt, die Anhäufung der Einzelfehler kann nicht bewirken, daß das für den zuverlässigen Betrieb zugelassene geringe Fehlermaximum überschritten wird.

In der Beschreibung sind nur einige Durchführungsmöglichkeiten und Ausführungsformen als Beispiele angeführt; die Erfindung kann davon abweichend mannigfaltig realisiert werden unter Beibehaltung der allgemeinen, für jede Durchführungsart und Ausführungsform gemeinsamen Kennzeichen: es wird ein starrer oder quasi-starrer Referenzgeber ausgespannt, es wird ein erstes elektrisches Signal erstellt, welches dem Abstand $(y_E-y_K)$ eines am Werkzeughalter starr befestigten Meßgebers vom Referenzgeber proportional ist, es wird in einem Positionsgeber ein zweites elektrisches Signal erstellt, welches der jeweiligen Stelle x proportional ist, dem jeweiligen Wert des zweiten elektrischen Signals entsprechend wird ein der Funktion f (x) = $y_K-y_A$ proportionales modifiziertes Sollwertsignal erstellt, und es wird die Differenz zwischen dem ersten elektrischen Signal und dem modifizierten Sollwertsignal gebildet, und mit dem so erstellten Differenzsignal wird der Servomechanismus gesteuert, welcher die Höhenlage des Bearbeitungsmittels reguliert.

Patentansprüche

1. Verfahren zur Feinfertigung von bestimmungsgemäß gleichmäßigen Mantelflächen an Körpern, vorteilhaft bei der Überholung von Bettführungen an Werkzeugmaschinen, mit Bearbeitungsmitteln, deren Halterung (Werkzeughalter) an einem mit einem Antrieb gekoppelten Schlitten angeordnet ist, wobei der Schlitten auf die zu fertigende(n) Arbeitsfläche(n) aufgesetzt und längs derselben stetig verschoben und im Laufe dieser Verschiebung die Arbeitsfläche bearbeitet wird, und an der Halterung des Bearbeitungsmittels ein starr befestigter Meßgeber angeordnet wird, der mit einem längs der Verschiebung-sbahn des Schlittens angeordneten Referenzgeber zusammenwirkend ein Istwertsignal liefert, welches mittelbar Aufschluss über die momentane relative Lage des Bearbeitungsmittels zur Arbeitsfläche gibt, und ein die relative Lage des Bearbeitungsmittels beeinflußender Servomechanismus in Abhängigkeit von diesem Istwertsignal gesteuert wird, dadurch gekennzeichnet, daß

- als Referenzgeber ein starrer oder quasi-starrer Körper in einer zur Arbeitsfläche parallel (darüber, daneben) liegenden Ebene zw ischen zwei die Länge (L) der zu bearbeitenden Oberfläche umfassenden Stellen $(x_0, x_L)$ in einer auf die jeweilige Stelle (x) der Verschiebungsbahn bezogenen relativen Höhe $(y_K)$ ausgespannt wird (z.B. ein an diesen Stellen $(x_0, x_L)$ in der nominalen relativen Höhe $(y_{KO}=y_{KL})$ abgestütztes, mittels Gewicht gespannt gehaltene Metallband oder Drahtseil);

- als mit dem Referenzgeber zusammenwirkender Meßgeber ein zweckmäßig induktiver oder kapazitiver
  Abstandgeber eingesetzt wird, der in an sich bekannter Weise den jeweiligen Abstand $y_E - y_K$
  zwischen Meßgeber und Referenzgeber repräsentierende, erste elektrische Signale liefert, und dieser Abstandgeber starr an der Halterung des
  Bearbeitungsmittels befestigt wird, und zwar derart,
  daß dessen Sensor an beliebiger Stelle x der
  Verschiebungsbahn dem Referenzgeber innerhalb
  des Sensibilitätsbereichs des Meßgebers gegenüber
  liegt;

- in einer Signalumsetzeinheit in Abhängigkeit von
  einem die jeweilige Stelle x der V erschiebungsbahn repräsentierenden Eingangssignal ein modifiziertes Sollwertsignal erzeugt wird, welches
  der Funktion

$$y_K - y_A = f(x)$$

entspricht, wobei $y_K$ die relative Höhe des Referenzgebers an der jeweiligen Stelle x bedeutet
und $y_A$ die in der technischen Vorschrift angegebene
nominale Höhe, in welcher der Meßgeber liegen muß,
wenn das Bearbeitungsmittel gerade in der für die
jeweilige Stelle x der Verschiebungsbahn vorausgesehenen Höhe liegt;

- der Verschiebung des Schlittens stetig oder
  quasi-stetig (mittels Abtasten) folgend ein
  zweites elektrisches Signal erzeugt wird, welches
  den momentanen Wert der Stelle x der Verschiebungsbahn verkörpert, und dieses Signal
  an den Eingang der Signalumsetzeinheit
  geschaltet wird;

- das modifizierte Sollwertsignal an den Sollwerteingang eines Differenzgebers geschaltet wird,
  an dessen Istwerteingang das erste elektrische
  Signal (Ausgangssignal des Meßgebers) geschaltet wird, und der Servomechanismus
  vom Ausgangssignal des Differenzgebers (oder
  davon abgeleiteten Signalen) gesteuert wird.

2. Verfahren gemäß Anspruch 1, d a d u r c h   g e -
   k e n n z e i c h n e t, daß für die Signalumsetzung ein der Funktion f (x) entsprechend
   programmierbarer elektronischer Signalgenerator
   eingesetzt wird.

3. Verfahren gemäß Anspruch 1, d a d u r c h   g e -
   k. e n n z e i c h n e t, daß für die Signalumsetzung eine Programmscheibe eingesetzt wird,
   deren Umfangsfläche als Abbildung der Funktion f
   (x) gestaltet ist, und mit dieser Umfangsfläche
   ein Abtastmittel, z.B. ein Meßumsetzer mit
   elektrischem Ausgang, gekoppelt wird, die Achse der
   Programmscheibe hingegen mit der Laufbahn
   des Schlittens gekoppelt wird, und die Abtastsignale
   mit einem in an sich bekannter Weise erstellten, der momentanen Geschwindigkeit des Schlittens proportionalen dritten elektrischen Signal verglichen werden; es wird ein das Resultat des Vergleichs repräsentierendes Signal erstellt und dieses wird an den Sollwerteingang des Differenzgebers geschaltet.

4. Verfahren gemäß Anspruch 1, d a d u r c h   g e - k e n n z e i c h n e t, daß für die Signalumsetzung ein elektronischer Datenspeicher, insbesondere ein PROM, eingesetzt wird, in welchem alle - in der technischen     Vorschrift vorkommende nominale Größen $y_K-y_A$ in Form binärer Daten so eingespeichert werden, daß sie mit den jeweiligen Wert der Stelle x verkörpernden Adressignalen ausgelesen werden können, und dieser Datenspeicher mit Signalen adressiert wird, die vom zweiten elektrischen Signal abgeleitet werden; die so ausgelesenen Signale werden an den Sollwerteingang des Differenzgebers geschaltet.

5. Verfahren gemäß Anspruch 1, d a d u r c h   g e - k e n n z e i c h n e t, daß die Länge L der Arbeitsfläche in eine Anzahl N (N ist eine beliebige ganze Zahl) äquidistanter oder voneinander verschieden langer Abschnitte $\Delta x$; aufgeteilt wird und vor Beginn des (ersten) Arbeitsgangs die Funktion f (x) an den Grenzpunkten zwischen jeweils benachbarten Abschnitten $\left(\Delta x_i, \text{ bzw. } \Delta x_{i+1}, 1 \leq i \leq N-1\right)$ meßtechnisch genau bestimmt wird und in jedem

Abschnitt $\Delta x_i$ die Folgeregelung einer Teilfunktion $f(x)_i$ entsprechend vorgenommen wird, wobei der Unterschied zwischen den Teilfunktionen $f(x)_i$, bzw. $f(x)'_i$ für verschiedene Abschnitte $\Delta x_i$ bzw. $\Delta x'_i$ auf Unterschiede in den Randwerten beschränkt sein kann, aber auch die Kennlinien der verschiedenen Teilfunktionen $f(x)_i$ in ihrem Verlauf voneinander abweichen können.

6. Verfahren gemäß Anspruch 1 bis 5, d a d u r c h   g e k e n n z e i c h n e t , daß neben der Anfangsstelle der Arbeitsfläche ein Ständer angeordnet wird, der als Verlängerung der Arbeitsfläche mit dementsprechender Oberfläche ausgeführt ist und der zweckmäßig auch den Antrieb für den Schlitten beherbergt, und bei Beginn des Arbeitsganges der Schlitten am Ständer aufgesetzt und die Verschiebung gegen die Stelle $x_L$ hier begonnen wird.

7. Einrichtung zur Feinfertigung von bestimmungsgemäß gleichmäßigen Mantelflächen an Körpern, vorteilhaft bei der Überholung von Bettführungen an Werkzeugmaschinen, mit einem Servomechanismus zur Beeinflussung der jeweiligen Lage des Bearbeitungsmittels (Werkzeugs) während des Arbeitsganges, einem an den Steuereingang des Servomechanismus angeschalteten Regelkreis, einem mit Antrieb gekoppelten Schlitten, an dem die Halterung des Bearbeitungsmittels (Werkzeughalter) angeordnet ist, einem längs der Verschiebungsbahn angeordneten Referenzgeber und einem mit dem Referenzgeber zusammenwirkenden Meßgeber, der starr oder über lösbare Bindemittel am Werkzeughalter befestigt ist, d a d u r c h   g e k e n n - z e i c h n e t, daß

- der Referenzgeber (108) ein zwischen zwei die Länge L der zu bearbeitenden Fläche umfassenden Stellen $x_0$, $x_L$ parallel zur Arbeitsfläche, d.h. darüber oder daneben, in einer auf die jeweilige Stelle x der Verschiebungsbahn bezogenen relativen Höhe $y_K$ ausgespannter starrer oder quasi-starrer Körper ist (z.B. ein an den Stellen $x_0$ und $x_L$ in der Höhe $y_{KO}=y_{KL}$ abgestütztes, mittels Gewicht (113) gespannt gehaltenes Metallband oder Drahtseil);

- der mit dem Referenzgeber zusammenwirkende Meßgeber (109) ein zweckmäßig induktiver oder kapazitiver Abstandgeber ist, der in an sich bekannter Weise den jeweiligen Abstand $y_E-y_K$ zwischen Meßgeber (109) und Referenzgeber (108) repräsentierende Signale liefert;

- in der Einrichtung eine der Funktion $y_K-y_A = f(x)$ entsprechend steuerbare Signalumsetzeinheit (110) so angeordnet ist, daß an einen Eingang derselben ein Positionsgeber (114) und an deren Ausgang der Sollwerteingang eines Differenzgebers (111) angeschlossen ist, während an den Istwerteingang des Differenzgebers (111) der Ausgang des Meßgebers (109) angeschlossen ist und der Ausgang des Differenzgebers (111) den Ausgang des Regelkreises bildet.

8. Einrichtung gemäß Anspruch 7, g e k e n n - z e i c h n e t   d u r c h   einen Ständer (115), der als Verlängerung der jeweiligen Arbeits- fläche (101) mit dementsprechender Oberfläche ausgeführt ist und zweckmäßig auch den Antrieb für den Schlitten (105) beherbergt.

9. Einrichtung gemäß Anspruch 7 oder 8, d a d u r c h g e k e n n z e i c h n e t, daß die Signalumsetz- einheit (110) mit einer Programmscheibe (304) ausgeführt ist, deren Umfangsfläche (304a) als Abbildung der Funktion f (x) gestalten ist, und mit dieser Umfangsfläche (304a) ein Meßumsetzer (306) mit elektrischem Ausgang gekoppelt ist, die Achse (304b) der Programmscheibe (304) über ein Getriebeorgan (305) mit der Laufbahn des Schlittens (104) gekoppelt ist, und der Ausgang des Messumsetzers (306) an einen Eingang einer Vergleicherschaltung (307) angeschlossen ist, an deren anderen Eingang der Ausgang des Positionsgebers (114), zweckmäßig eines mit der Achse (302) des Antriebs (105) gekoppelten Winkelgeschwindigkeit-Gebers (303), angeschlossen ist, sowie der Ausgang der Vergleicherschaltung (307) an den Sollwerteingang des Differenzgebers (111) angeschlossen ist.

10. Einrichtung gemäß Anspruch 7 oder 8, d a d u r c h g e k e n n z e i c h n e t, daß die Signalumsetz- einheit (110) mit einem dem Argument x entsprechend adressierbaren elektronischen Datenspeicher (401), vorzugsweise einem PROM, bestückt ist, in welchen der Wertevorrat der Funktion f (x) in Form binärer Daten, dem Argument x entsprechend adressiert, eingespeichert ist, und der Ausgang des Positionsgebers (114), vorteilhaft über Signalumformermittel, mit dem Adresseneingang (401a) des Datenspeichers (401) verbunden ist, sowie die Leseausgänge (401b) des Datenspeichers (401) mit dem Sollwerteingang des Differenzgebers (111) verbunden sind.

Figur 1

0154233

1/5

Figur 2

301

302

105

303

114

109

307

111

110

306    304

104

Figur 3a

a

304    306

b

104

101

305

Figur 3b

Figur 4

Figur 5

5/5